Europäisches Patentamt

(19) European Patent Office

Office européen des brevets

(11) Publication number: **0 217 985**
**B1**

(12) EUROPEAN PATENT SPECIFICATION

(45) Date of publication of the patent specification:
29.11.89

(51) Int. Cl.⁴: **H02H 9/04**

(21) Application number: 85306408.7

(22) Date of filing: 10.09.85

(54) Transient suppression system.

(43) Date of publication of application:
15.04.87 Bulletin 87/16

(45) Publication of the grant of the patent:
29.11.89 Bulletin 89/48

(84) Designated Contracting States:
AT BE CH DE FR GB IT LI LU NL SE

(56) References cited:
EP-A- 0 088 179
EP-A- 0 103 180
DE-A- 2 405 671
GB-A- 2 093 647
US-A- 4 089 032

L.P. HUNTER,"Handbook of Semiconductor
Electronics",1970, Mc GRAW-HILL BOOK COMPANY,
New York, Selten 9-10, 9-11

(73) Proprietor: Semitron Cricklade Limited, Chelworth
Industrial Estate, Cricklade Wiltshire(GB)

(72) Inventor: Howard, Christopher George, Priory Cottage
Wood Street, Wootton Bassett Wilts.(GB)
Inventor: Woods, Ian, 13/14 Kent End, Ashton Keynes
Glos.(GB)

(74) Representative: Mehl, Ernst, Dipl.-Ing.,
Postfach 22 13 17, D-8000 München 22(DE)

## Description

This invention relates to a transient suppression system according to the preamble of claim 1.

GB-A 2 093 647 discloses such a transient suppression system.

A transient absorption semiconductor device (transient suppressor) presents a relatively high impedance over a given range of applied voltage and a low impedance in response to transient voltage excursions from the given range, the device having particular application as a protection device in an electrical circuit, for protecting the circuit by selectively conducting transient surges in current flowing in the circuit.

It is known that a PN junction in a semiconductor body can be used to protect an electrical circuit from transient voltage surges. The PN junction is connected across a voltage supply to the circuit such as to be reverse biased. The breakdown voltage of the reverse biased junction is selected to be somewhat greater than the voltage normally developed by the supply. Thus in normal use, the junction does not conduct substantially but in the event of a transient voltage surge which results in the supply voltage exceeding the breakdown voltage, the reverse biased junction breaks down and conducts the current surge associated with the voltage surge, so as to protect the circuit from the surge. The breakdown voltage is typically in the range 2 - 1000 V the value thereof being selected for the junction concerned by control of the doping levels utilised in manufacture of the junction. For higher voltages in the aforementioned range of breakdown voltages the breakdown occurs by virtue of the Avalanche effect whereas at lower voltages the Zener effect may predominate.

Typically the current flowing in the reverse biased junction prior to breakdown is of the order of 1 - 10 µA whereas after breakdown, heavy current surges with peak currents of 25 amps or more may flow.

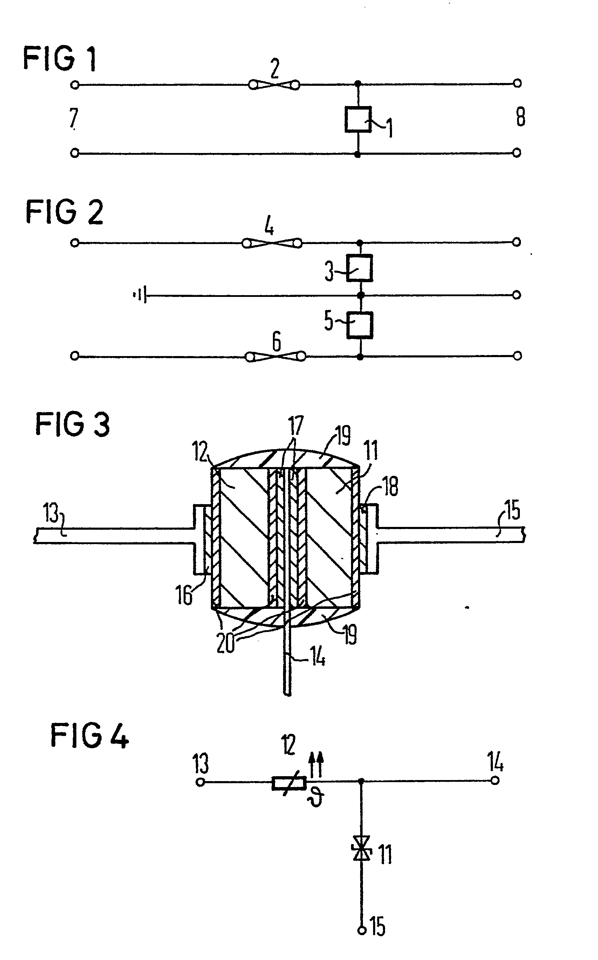

Transient suppressors are frequently used in connection with fuses in surge protection circuits such as that shown in Figure 1. The transient suppressor 1 is used to clamp short duration pulse voltages with time constants in the range 10 nsec to 10 msec. These voltages can reach 5000 V and the associated currents 5000 amps. The fuse 2 is used to prevent longer duration fault conditions damaging the transient protector 1 and thereafter subsequent electronic devices in the system.

The fuse 2 controls the electrical power input to the transient suppressor 1. The transient suppression system of Figure 1 has the input 7 and the output 8.

Figure 2 shows two such circuits as shown in Figure 1 in a configuration often used in telecommunications applications. The transient suppression system of Figure 2 comprises two transient suppressors 3, 5 and two fuses 4, 6, the two transient suppressors 3, 5 having one common terminal which is set on a reference potential.

Instead of fuses positive temperature coefficient thermistors have been used for this application as they are unaffected by short time constant current and voltage transients. Such a transient suppression circuit offers a high degree of protection to subsequent components and operates well under a wide range of fault conditions. There is however a range of long time constant surges which are too low in current to affect the thermistor resistance but large enough to cause excessive dissipation in the transient suppressor device. These can lead to degradation of the transient suppressor device and the circuitry it is protecting.

One embodiment of a protection arrangement according to GB-A 2 093 647 has a PTC (Positive Temperature Coefficient-Thermistor) and a VDR (Voltage Dependent Resistor) and a copper plate between the PTC and the VDR. A VDR which is connected on one side (the contacting side) to an other element and which is cooled at the other side (the side which is exposed to the air) by the ambient air, will, since air has a much lower cooling capacity than the material at the contacting side, reach a considerably higher temperature at the side exposed to the air than at the contacting side, when a large quantity of heat is generated in its interior. Thus, it is possible that, at the side exposed to the air, the VDR may be damaged by overheating before its contacting side – and consequently the PTC – has become so hot that the PTC starts performing its current-impeding function. To limit the temperature, the GB-A 2 093 647 teaches to provide the last-mentioned side with a heat sink having such a heat capacity that the temperature at the side onto which the heat sink has been applied does not increase to such an extent that overheating is the result. However, the heat sink causes the PTC to start performing its current-impeding function later.

The present invention provides an improved transient suppression system according to claim 1 in which the aforementioned disadvantages are overcome.

The transient suppressor device is placed in intimate thermal contact with the positive temperature coefficient thermistor. This allows heating of the transient suppressor device over the temperature at which the thermistor resistance exhibits large changes (~100°C) to result in current limiting. This current limiting effect will protect both the transient suppressor device and the subsequent circuitry from damage.

Those skilled in the art will readily be able to determine from the following explanations and by routine trial and experiment suitable junction configurations and doping levels which produce this decrease in voltage upon breakdown of the reverse biased junction.

Whilst, as will hereinafter be discussed, variation of one or more of the manufacturing parameters of the transient suppression system according to the invention enables systems to be manufactured consistently and reliably with breakdown voltages within a relatively wide range and up to relatively high values of the order of 150 to 200 V for example, for applications in the higher voltage areas the invention further proposes, rather than the provision of a single transient suppressor, to couple together in series two or more transient suppressors each of a lower breakdown voltage rating. The resultant composite system has a breakdown voltage substantially corresponding to the sum of the breakdown voltages of the individual transient suppressors of the composite multi-device structure.

In order that the invention may be more fully understood embodiments thereof and their operating characteristics will be described by way of illustrative example and by way of contrast with prior art systems, reference being had to the accompanying drawings wherein:

Figures 1 and 2 show prior art transient suppression systems;

Figure 3 shows a transient suppression system according to the invention;

Figure 4 shows the electrical circuit elements of the transient suppression system according to Figure 3.

Figure 3 shows one application of the invention. A transient suppressor device 11 type L5C 150 CD manufactured by Semitron Cricklade Ltd, Cricklade Swindon, Wiltshire SN6 6HQ, GB, is soldered to a positive temperature coefficient thermistor 12 type manufactured by STC Components, GB. The transient suppressor device L5C 150 CD is of a type known as a foldback device (European Patent Application 82 304 718.8 = EP 0 088 179 A and US-Patent application Ser. No. 418 357).

Such a foldback device comprises a body of semiconductor material including a region of a first conductivity type disposed between regions of opposite conductivity type so as to define first and second spaced apart semiconductor rectifying junctions, first and second electrodes so arranged that when a potential difference is applied thereto one of said junctions is forward biased and the other of the junctions is reverse biased, the junctions being disposed to interact in such a manner that upon breakdown of the reverse biased junction from a relatively low conductivity state to a relatively high conductivity state and with an increase in the magnitude of the current flowing through the device, the magnitude of the potential difference developed across the electrodes decreases from that which causes said breakdown but does not decrease to a value less than a given non-zero value.

For an applied voltage V up to a given breakdown voltage $V_b$, the current flowing through the foldback device is the foldback device leakage current which is very small, for example 5 $\mu$A, and this has a significant effect on the operation of the circuit being protected. In this situation, one PN junction is forward biased, and the other PN junction is reverse biased but not such as to exceed its breakdown voltage.

When a voltage transient occurs in the supply voltage V, such as to apply to the device a voltage exceeding $V_b$, the reverse biased junction breaks down and conducts by means of the Avalanche effect. Consequently, the foldback device then provides a conductive path for surge currents produced by the voltage transient, and the surge currents thus by-pass the circuit to be protected to prevent it being damaged. As the surge current increases, the voltage developed across the device rapidly reduces from the foldback device breakdown voltage $V_b$ to a predetermined non-zero value $V_m$ and as the current increases further, the voltage remains at the value $V_m$ at least over a considerable range of surge current.

The voltage $V_m$ may be selected by means of the doping process used to make the device and principally by control of the proximity to one another of the two PN junctions by control of the dopant diffusion depths and will be selected in dependance upon the characteristics of the circuit to be protected to be in excess of the minimum safe supply voltage for the circuit being protected.

Such a foldback device 11 is designed to breakdown at approximately 160 V. The voltage across the device 11 is then reduced to approximately 100 V due to the "foldback" action of the device 11.

The thermistor 12 is designed to change from a low resistance state (20 ohms) to a high resistance state (20 kohm) by heating from 100 °C to 150 °C. The assembly has three terminals 13, 14, 15 soldered to it with solder 16, 17, 18, and is coated with silicone rubber 19 to passivate the semiconductor junctions and to prevent flashover. Metal electrodes 20 are placed between the solder 16, 17, 18 and the respective surfaces of the devices 11, 12 in order to improve the electrical contact between the terminals 13, 14, 15 and the devices 11,12.

The resultant composite device has the circuit elements shown in Figure 4. One such device is required for the circuit shown in Figure 1 and two such devices are required for the circuit shown in Figure 2.

The terminals 13, 14 of the device of Figure 3, 4 are supplied with the electrical input and the terminals 14, 15 yield the corresponding electrical output.

An assembly of the type depicted in Figure 3 has shown excellent powers of circuit protection. The thermistor 12 protects against continuous excessive current. The transient suppressor 11 protects against short time constant surges. The thermistor 12 also reacts to excessive temperature due to power dissipation in the transient suppressor device 11. The combined unit therefore acts as a protector in intermediate fault conditions. Such behaviour was observed when subjecting the device to a 200 mA/240 V AC fault current for a duration of 5 minutes. If the thermistor 12 and transient suppressor 11 were not placed in thermal contact, the transient suppressor 11 would be degraded by this condition. The new innovative device limited the current to prevent excessive temperature rise in the transient suppressor device 11.

The transient suppression system does not only apply to Zener diode based semiconductor devices, but can apply to other transient absorption semiconductor devices such as thyristor based protectors.

## Claims

1. Transient suppression system for use in telecommunication applications comprising at least one transient absorption semiconductor device (11) having at least two PN junctions for clamping short duration pulse voltages and being placed in intimate thermal contact with at least one positive temperature coefficient thermistor (12) for controlling the electrical power input to said at least one transient absorption seminconductor device (11) thereby preventing longer duration fault conditions damaging said transient absorption semiconductor device (11), characterized by a coating (19) to passivate the semiconductor junctions and to prevent flash-over.

2. Transient suppression system according to claim 1, characterized in that at least one transient absorption semiconductor device (11) is soldered to at least one of the at least one positive temperature coefficient thermistors (12).

3. Transient suppression system according to claim 1 or 2, characterized in that at least one positive temperature coefficient thermistors (12) is designed to change from a low resistance state to a high resistance state by heating from 100°C to 150°C.

4. Transient suppression system according to one of the claims 1 to 3, characterized in that at least one transient absorption semiconductor device (11) is designed to breakdown at approximately 160 V.

5. Transient suppression system according to claim 4, characterized in that after the breakdown of the at least one transient absorption semiconductor device (11) the voltage across the at least one transient absorption semiconductor device (11) is reduced to approximately 100 V due to a foldback action of the transient absorption semiconductor device (11).

6. Transient suppression system according to one of the claims 1 to 5, characterized by three terminals (13, 14, 15) soldered to it.

7. Transient suppression system according to one of the claims 1 to 6, characterized by at least one Zener diode based semiconductor device as a transient absorption semiconductor device (11).

8. Transient suppression system according to one of the claims 1 to 7, characterized by at least one thyristor based protector as a transient absorption semiconductor device (11).

## Patentansprüche

1. System zum Unterdrücken eines transienten Vorganges zur Verwendung für Telekommunikationszwecke, mit wenigstens einem Spannungsbegrenzungselement (11), welches wenigstens zwei PN-übergänge aufweist, zum Klemmen von Spannungspulsen kurzer Zeitdauer, und welches Spannungsbegrenzungselement (11) in engem thermischen Kontakt mit wenigstens einem Thermistor (12) mit einem positiven Temperaturkoeffizienten des Widerstandswertes zur Steuerung der elektrischen Eingangsleistung zu dem wenigstens einen Spannungsbegrenzungselement (11) angeordnet ist, wodurch Störbedingungen von längerer Zeitdauer, die das Spannungsbegrenzungselement (11) schädigen, verhindert werden, gekennzeichnet durch einen Überzug (19) zur Passivierung der Halbleiter-übergänge und zur Verhinderung des Überspringens von elektrischen Funken.

2. System nach Anspruch 1, dadurch gekennzeichnet, daß wenigstens ein Spannungsbegrenzungselement (11) mit wenigstens einem Thermistor (12), der einen positiven Temperaturkoeffizienten des Halbleiterwiderstands aufweist, mit Lot verbunden ist.

3. System nach Anspruch 1 oder 2, dadurch gekennzeichnet, daß wenigstens ein Thermistor (12), der einen positiven Temperaturkoeffizienten des Halbleiterwiderstands aufweist, so ausgebildet ist, daß er bei Erwärmung von 100°C auf 150°C von einem Zustand niedrigen Widerstands zu einem Zustand hohen Widerstands wechselt.

4. System nach einem der Ansprüche 1 bis 3, dadurch gekennzeichnet, daß wenigstens ein Spannungsbegrenzungselement (11) so ausgebildet ist, daß es bei etwa 160 V einen Durchbruch erleidet.

5. System nach Anspruch 4, dadurch gekennzeichnet, daß nach dem Durchbruch von wenigstens einem Spannungsbegrenzungselement (11) die an diesem wenigstens einen Spannungsbegrenzungselement (11) anliegende Spannung auf etwa 100 V reduziert ist infolge einer Foldback-Aktion des Spannungsbegrenzungselements (11).

6. System nach einem der Ansprüche 1 bis 5, gekennzeichnet durch drei elektrische Anschlüsse (13, 14, 15), die mit dem System durch Lot verbunden sind.

7. System nach einem der Ansprüche 1 bis 6, gekennzeichnet durch wenigstens ein Halbleiterelement auf Zener-Dioden-Basis als Spannungsbegrenzungselement (11).

8. System nach einem der Ansprüche 1 bis 7, gekennzeichnet durch wenigstens ein Schutzelement auf Thyristor-Basis als Spannungsbegrenzungselement (11).

## Revendications

1. Système de suppression de transitoires prévu pour l'utilisation dans des applications de télécommunications, comprenant au moins un dispositif à semiconducteurs d'absorption de transitoires (11) ayant au moins deux jonctions PN, pour éliminer des tensions sous forme d'impulsions de courte durée, et qui est placé en contact thermique intime avec au moins une thermistance à coefficient de température positif (12) pour commander la puissance électrique qui est appliquée à ce ou ces dispositifs à semiconducteurs d'absorption de transitoires (11), pour empêcher ainsi que des conditions de défaut de plus longue durée n'endommagent le dispositif à semiconducteurs d'absorption de transitoires (11), caractérisé par un enrobage (19) destiné à passiver les jonctions semiconductrices et à empêcher l'amorçage d'un arc en surface.

2. Système de suppression de transitoires selon la revendication 1, caractérisé en ce que au moins un dispositif à semiconducteurs d'absorption de transitoires (11) est brasé sur l'une au moins des thermistances à coefficient de température positif (12).

3. Système de suppression de transitoires selon la revendication 1 ou 2, caractérisé en ce que au moins une thermistance à coefficient de température positif (12) est conçue de façon à passer d'un état à faible résistance vers un état à résistance élevée lorsqu'elle est chauffée de 100°C à 150°C.

4. Système de suppression de transitoires selon l'une quelconque des revendications 1 à 3, caractérisé en ce que au moins un dispositif à semiconducteurs d'absorption de transitoires (11) est conçu pour que son claquage se produise à environ 160 V.

5. Système de suppression de transitoires selon la revendication 4, caractérisé en ce que après le claquage de l'un des dispositifs à semiconducteurs d'absorption de transitoires (11), la tension aux bornes de ce dispositif à semiconducteurs d'absorption de transitoires (11) est réduite à environ 100 V à cause d'une action de retombée de tension du dispositif à semiconducteurs d'absorption de transitoires (11).

6. Système de suppression de transitoires selon l'une quelconque des revendications 1 à 5, caractérisé par trois bornes (13, 14, 15) qui sont brasées sur ce système.

7. Système de suppression de transitoires selon l'une quelconque des revendications 1 à 6, caractérisé par au moins un dispositif à semiconducteurs basé sur une diode Zener, en tant que dispositif à semiconducteurs d'absorption de transitoires (11).

8. Système de suppression de transitoires selon l'une quelconque des revendications 1 à 7, caractérisé par au moins un dispositif de protection basé sur un thyristor, en tant que dispositif à semiconducteurs d'absorption de transitoires (11).

1

# FIG 1

7    2    1    8

# FIG 2

4    3    5    6

# FIG 3

12  17  19  11  18
13    15
16    20    19    14

# FIG 4

13    12    14
11
15